# EUROPEAN PATENT APPLICATION

(11) **EP 3 805 082 A1**
(43) Date of publication of application: **14.04.2021**
(21) Application number: 19807658.0
(22) Date of filing: 22.05.2019
(51) Int. Cl.: B62K 11/00, B62K 3/00, B62J 99/00

(54) **HUMAN-MACHINE INTERACTION BODY-SENSING VEHICLE**

(30) Priority: 25.05.2018 CN 201820796393 U; 25.05.2018 CN 201820793487 U; 05.07.2018 CN 201821063387 U; 05.07.2018 CN 201810730293
(71) Applicant: Hangzhou Chic Intelligent Technology Co., Ltd, Hangzhou, Zhejiang 310000 (CN)
(72) Inventor: YING, Jiawei, Hangzhou, Zhejiang 310000 (CN); HU, Guangwei, Hangzhou, Zhejiang 310000 (CN)
(74) Representative: Ipside
(86) International application number: PCT/CN2019/088037
(87) International publication number: WO 2019/223738

(57) **Abstract**

A human-machine interaction body-sensing vehicle, including two support frames (1) relatively disposed left and right, is provided. The rotational connection between inner ends of the two support frames (1) is implemented through a rotating mechanism. A middleware (2) is disposed between the two support frames (1). The middleware (2) can facilitate disposing different functional extensions (22), so that the human-machine interaction body-sensing vehicle may be remodeled into different shapes/functions.

## Description

### Technical Field

The disclosure relates to a balance vehicle, and in particular to a human-machine interaction body-sensing vehicle with a middleware or an extension with detachable function.

### Background of the Invention

The operating principle of the human-machine interaction body-sensing vehicle, also known as the electric balance vehicle or the think car, is mainly established on a basic principle called "dynamic stability", which uses the gyroscope and the acceleration sensor in the vehicle body to detect changes in posture of the vehicle body, and uses the servo control system to precisely drive the motor for corresponding adjustments, so as to maintain the balance of the system.

The patent document with publication number CN104029769 discloses an electric balance plasma car, which includes a top cover, an inner cover, a bottom cover, a hub motor, a rotating mechanism, and a balance control mechanism. The top cover, the inner cover, and the bottom cover all include two symmetrically arranged and mutually rotatable parts. The inner cover is located between the top cover and the bottom cover and cooperates with the two. The rotating mechanism is fixed at the middle lateral position of the inner cover. The hub motor is longitudinally disposed and fixed to the left and right sides of the inner cover. The balance control mechanism is fixed to the bottom cover and is connected to the motor. The rotating mechanism includes two bearings, a shaft sleeve, and two circlips. The two bearings are respectively fixed at the inner ends of two identical parts of the inner cover. The shaft sleeve is fixed in the two bearings and are fixed to the inner cover through the circlips. In this structure, the vehicle body is divided into two parts that rotate left and right. The user may control the movement state, such as moving forward, moving backward, and steering, of the balance vehicle through only exerting force using the feet. In order to improve the user experience and actual usage requirements, the human-machine interaction body-sensing vehicle needs to be disposed with functional extensions such as a lighting device and a display device.

For example, in the structure disclosed by the patent document with publication number CN106184529, a functional extension is disposed in the middle of two relatively rotating car frames. The functional extension may be a decorative piece such as a lighting piece or a driving status display screen, or the functional extension may be equipped with an armrest or a seat as well as other accessories to further extend the auxiliary function of the body-sensing vehicle, so as to implement the full development and utilization of the whole structure of the balance vehicle, thereby further satisfying usage requirements of people for human-machine interaction movement devices.

For another example, in the structure disclosed by the patent documents with publication numbers CN106184531, CN106184531, and CN106515957, a left pedal and a right pedal that respectively rotate independently are disposed on a supporting shaft, a middle box is fixedly connected to the supporting shaft between the left pedal and the right pedal, and the middle box is disposed with a supporting foot. When needed, the supporting foot may be extended to cooperate with two wheels to support the vehicle body, so as to facilitate the parking of the balance vehicle. In addition, due to the arrangement of the middle box, given that the middle box is disposed in the middle portion and many objects may be disposed in the middle box, the middle box becomes the center of gravity of the whole balance vehicle, which reduces the occurrence of unstable center of gravity when the user uses the balance vehicle. The arrangement of an avoidance gap allows the supporting foot to be more reasonably disposed at the middle box.

However, the functional extensions are not detachable, time-consuming to install, and relatively simple in structure.

In addition, there are very few balance vehicles specifically for children or new parents in the market. Children not only like to play with balance vehicles, but also like to play with bubble blowing toys. If the balance vehicle has a bubble blowing function, the fun of children playing with the balance vehicle can be increased. A bubble machine includes a bubble core and a liquid storage container. In the existing bubble machine, the liquid storage container and the bubble core are combined on a single body, and the structure is complicated. For example, the patent document with publication number CN203001986U discloses a bubble blowing toy, which includes a blowing device, a liquid storage container, and a bubble blower. The bubble blower includes a hollow case with two openings connected to the blowing device and a speaker-shaped hollow body with a large opening at one end and a small opening at the other end disposed in the hollow case. Several windows are openly disposed on the speaker-shaped hollow body. A spacing is formed between the speaker-shaped hollow body and the hollow case. A liquid pipe is disposed between the speaker-shaped hollow body and the hollow case. An outlet of the liquid pipe is located on the inner surface of the speaker-shaped hollow body, and an inlet is communicated with an infusion pipe fitting disposed outside the hollow case. In this structure, the liquid storage container is integrated with the bubble core.

In addition, the power of the balance vehicle is provided by the electric motor. Since the principle of fuel power of the electric motor is different, the electric motor does not produce the unique sound of a working engine during the movement process. Therefore, during the working process of the balance vehicle, the operator cannot judge the working state of the electric motor through sound perception, and the sensory experience and the fun during the riding process are also reduced. At the same time, since the electric motor is relatively quiet during the working process, the sound warning function on the surrounding pedestrians is reduced, which is more dangerous.

### Summary of the Invention

### Technical Problem

In view of the shortcomings of the prior art, one of the objectives of the disclosure is to provide a human-machine interaction body-sensing vehicle with an extension with detachable function. The middle part of the human-machine interaction body-sensing vehicle may be quickly detached to be remodeled into a human-machine interaction body-sensing vehicle with different shapes/functions.

A second objective of the disclosure is to provide a human-machine interaction body-sensing vehicle with bubble blowing function. The bubble blowing function is added to the balance vehicle, which increases the fun of use, has a simple and reliable structure, is convenient to operate, and is applicable for balance vehicles of different models.

A third objective of the disclosure is to provide an electric balance vehicle and a method for simulating motor sound playback. According to specified sampling rate and sampling accuracy, through measures such as recording or software synthesis of audio, sound data of various working conditions of a vehicle motor igniting and flameout, and the motor accelerating from an idle speed to a maximum speed is stored in the memory. Then, the corresponding sound data is selected for playback according to the real-time state of the balance vehicle to implement the function of simulating vehicle motor sound playback.

A fourth objective of the disclosure is to provide a human-machine interaction body-sensing vehicle and an engine-sound simulation device capable of synchronously simulating the engine sound according to the movement state.

### Technical Solution to the Problem

In order to solve the above technical problems, the disclosure provides the following technical solutions:
A human-machine interaction body-sensing vehicle with an extension with detachable function includes two support frames relatively disposed left and right. The rotational connection between inner ends of the two support frames is implemented through a rotating mechanism. A middleware is disposed between the two support frames. The middleware includes a base and a functional extension detachably connected to the base. The base and the functional extension are detachably connected, so that a middle part of the human-machine interaction body-sensing vehicle may be quickly detached. In this way, the middleware of the human-machine interaction body-sensing vehicle may be quickly detached to be remodeled into a human-machine interaction body-sensing vehicle of different shapes/functions.

Preferably, the base is disposed with an arc-shaped groove, and the functional extension is disposed with an arc-shaped protrusion. The connection between the base and the functional extension is implemented through engaging the arc-shaped protrusion with the arc-shaped groove. Of course, it may also be that the functional extension is disposed with an arc-shaped groove, and the base is disposed with an arc-shaped protrusion matching the arc-shaped groove. The connection between the base and the functional extension is implemented through engaging the arc-shaped protrusion with the arc-shaped groove.

Preferably, the base is disposed with a linear groove, and the functional extension is disposed with a protrusion matching the shape of the linear groove. The connection between the base and the functional extension is implemented through engaging the protrusion into the linear groove. Of course, it may also be that the functional extension is disposed with a linear groove, and the base is disposed with a protrusion matching the linear groove. The connection between the base and the functional extension is implemented through engaging the protrusion into the linear groove.

Preferably, a screw is also disposed. The base and the functional extension are connected through the screw.

Preferably, the functional extension is disposed with a hook extending downward, and the base is disposed with an engaging opening corresponding to the hook. The connection between the base and the functional extension is implemented through engaging the hook extending downward with the engaging opening.

Preferably, an electronic control module for controlling the human-machine interaction body-sensing vehicle is also included. The functional extension is a display assembly including a display screen and a transparent upper cover. The electrical connection between the display screen and the electronic control module of the human-machine interaction body-sensing vehicle or the power supply is implemented through a connector on the base.

Preferably, an electronic control module for controlling the human-machine interaction body-sensing vehicle is also included. The functional extension includes a bubble core and a case. The case and the base are detachably connected. The electrical connection between the bubble core and the electronic control module of the human-machine interaction body-sensing vehicle or the power supply is implemented through a connector on the base.

Preferably, an electronic control module for controlling the human-machine interaction body-sensing vehicle is included. The functional extension includes a bubble core and a case. The case and the base are detachably connected. A control switch of the bubble core is disposed on the case. Preferably, the rotating mechanism is a rotating shaft. A fixing piece and a limiting piece capable of swinging or rotating are disposed on the rotating shaft. The limiting piece is installed on the fixing piece and the plane where the limiting piece swings or rotates is parallel to the axis of the rotating shaft. The left and right sides of the limiting piece respectively cooperate to limit the left and right support frames. The middleware is fixed to or integrally formed on the fixing piece.

A human-machine interaction body-sensing vehicle with bubble blowing function includes two support frames relatively disposed left and right. The rotational connection between inner ends of the two support frames is implemented through a rotating mechanism. A middleware is disposed between the two support frames. In this way, a bubble machine is disposed in the middleware. The bubble blowing function is added to the balance vehicle, which increases the fun of use, has a simple and reliable structure, is convenient to operate, and is applicable for balance vehicles of different models.

Preferably, a fixing column is disposed on the middleware. A fixing sheet is installed on the fixing column. The bubble core is fixed through installing the fixing sheet to the fixing column. One fixing piece is installed on a pair of fixing columns. By installing one fixing piece to a pair of fixing columns, the fixing is firmer.

Preferably, the middleware includes a case and a base. The case and the base are detachably connected. In this way, the case and the base are movably connected, so that the middleware may be quickly installed, which is convenient to add water to the bubble machine, and is also convenient to uninstall the bubble machine when the bubble machine is not needed.

Preferably, an electronic control module for controlling the human-machine interaction body-sensing vehicle is also included. The electrical connection between the bubble core and the electronic control module is implemented through a connector on the base.

Preferably, the bubble core is disposed with a switch.

Preferably, the middleware includes a case and a base. The case and the base are integrally fixed.

Preferably, the case is disposed with a bubble outlet. The bubble core is disposed with a bubble blower. The bubble blower passes through the bubble outlet. The bubble blower passes through the bubble outlet to facilitate the bubble core to blow bubbles.

Preferably, a liquid storage container connected to the bubble core is also disposed in the middleware. At least one side of the bubble core is disposed with the liquid storage container. In this way, the liquid storage container of the bubble machine is separated from the bubble core, so that the structure of the bubble machine is small and exquisite to make fully utilize the space in the middleware.

Preferably, the rotating mechanism is a rotating shaft. The rotating shaft is disposed with a fixing piece and a limiting piece capable of swinging or rotating. The limiting piece is installed on the fixing piece and the plane where the limiting piece swings or rotates is parallel to the axis of the rotating shaft. The left and right sides of the limiting piece respectively cooperate to limit the inner ends of the left and right supporting frames. The middleware is fixed to or integrally formed on the fixing piece.

Preferably, at least one side of relative sides of the two support frames is fixed with a rotation limiting piece. The middleware is connected to limit with the rotation limiting piece on at least one support frame, so as to limit a rotation angle of the middleware relative to one support frame or two support frames.

A method for simulating motor sound playback of an electric balance vehicle includes the following steps.

Sound data is acquired: sound data of a vehicle motor from an idle speed to a maximum speed is acquired for storing.

A sound data segment is selected: a current speed of the electric balance vehicle in a forward direction is acquired, and a sound data segment at a corresponding speed is selected for buffering according to the speed.

The sound data segment is outputted: a current acceleration of the electric balance vehicle in the forward direction is acquired, a reading interval for reading the sound data from a buffer is determined according to the acceleration, the buffered sound data segment is read according to the determined reading interval, and read results are sequentially played according to a bit rate of the sound data.

The sound data is segmented according to speed when storing the sound data or selecting the sound data segment.

In the method for simulating the motor sound playback of the electric balance vehicle, the sound data of the simulated vehicle motor is stored in advance. Then, the corresponding sound data segment is selected from the storage for buffering according to the real-time speed of the electric balance vehicle. The reading interval is determined according to the current acceleration of the balance vehicle. Current buffered sound data points are read for output according to the reading interval, so as to simulate the vehicle motor sound.

Preferably, the step of segmenting the sound data according to speed includes the following step. A starting position, a length, and a corresponding speed interval of each sound data segment are recorded.

Preferably, the step of acquiring the sound data includes the following steps. Sound data generated by a vehicle motor when simulating ignition and flameout is acquired. The acquired sound data is classified. A starting position, a length, and a sound data type of various sound data storage are recorded.

Preferably, the electric balance vehicle includes a vehicle body and a hub motor driving the vehicle body to move. A speed and an acceleration of a horizontal movement of the vehicle body are acquired in real time through detecting a rotational speed of the hub motor of the vehicle body.

Preferably, the step of determining the reading interval for reading the sound data from the buffer according to the acceleration includes the following steps. The reading interval is preset as a=1. The acceleration increases within a set threshold, and the reading interval a correspondingly increases. If the acceleration exceeds the set threshold, the buffered sound data segment is updated to a sound data segment corresponding to an interval greater than the current speed.

Preferably, the step of outputting the sound data segment includes the following steps. A playback address is defined as a position index of the buffer. Data is read from the buffer according to the playback address and is outputted by a digital-to-analog converter (DAC). An initial address of the playback address is determined according to the starting position of the selected sound data segment. A next playback address = a current playback address + the reading interval.

Preferably, when outputting the sound data segment, the buffered sound data segment is cyclically outputted, which includes the following steps. Timer interrupt is adopted. A count point is counted for every interrupt. A count value of the count point is compared with a length K of a current sound data segment. When the count value reaches K, the count value of the count point is cleared. The initial address of the playback address is set as the next playback address.

An electric balance vehicle adopts the method for simulating the motor sound playback.

An engine-sound simulation device for a human-machine interaction body-sensing vehicle includes the following.

A detector is configured to detect a current movement state of the body-sensing vehicle.

A memory stores engine-sound audio data.

A controller extracts the audio data in the memory according to a detection signal of the detector.

A voice player receives the audio data selected by the controller for playback.

The detector, the memory, and the voice player are respectively electrically connected to the controller.

Preferably, the detector includes a sensor configured to directly or indirectly detect a speed and/or an acceleration of the human-machine interaction body-sensing vehicle in a forward direction.

Preferably, the sensor is a Hall sensor disposed on a stator of a hub motor.

Preferably, the controller is configured to adjust a playback speed of the selected sound audio data according to the acceleration detected by the detector.

Preferably, the voice player includes a power amplifier unit and a speaker.

Preferably, the memory is a flash chip, and the controller is a microcontroller unit (MCU). The flash chip and the MCU are connected through serial peripheral interface (SPI) communication.

A human-machine interaction body-sensing vehicle includes a vehicle body, which has the engine-sound simulation device.

Preferably, a display, configured to display a movement state of a vehicle, is disposed on the vehicle body.

Preferably, the display includes an indicator light and a light-emitting diode (LED) display screen. An LED driver circuit is disposed between the controller and the LED display screen.

The human-machine interaction body-sensing vehicle and the engine-sound simulation device for the human-machine interaction body-sensing vehicle can synchronously simulate the engine sound effect through a sound generator, such as the speaker, according to the movement state of the body-sensing vehicle to increase the fun of the user during the riding process and can have the sound warning function to the surrounding pedestrians, so as to improve the safety during the riding process.

### Technical Effect of the Invention

In this way, the middle part of the human-machine interaction body-sensing vehicle can be quickly disassembled and assembled so that the human-machine interaction body-sensing vehicle of different shapes/functions can be modified.

### Brief description of the Drawings

FIG. 1 is a schematic diagram of a structure of a human-machine interaction body-sensing vehicle with an extension with detachable function.
FIG. 2 is a schematic diagram of a structure of Embodiment 1.
FIG. 3 is a schematic diagram of a structure of Embodiment 2.
FIG. 4 is a schematic diagram of a structure of Embodiment 3.
FIG. 5 is a schematic diagram of a structure of Embodiment 4.
FIG. 6 is a schematic diagram of a structure of Embodiment 5.
FIG. 7 is a schematic diagram of a structure of a human-machine interaction body-sensing vehicle with bubble blowing function.
FIG. 8 is a schematic diagram of an installation structure of a bubble core.
FIG. 9 is a bottom view of FIG. 8.
FIG. 10 is a block diagram of main functional modules of a method for simulating motor sound playback of an electric balance vehicle.
FIG. 11 is a schematic diagram of segmenting sound data segments.
FIG. 12 is a flowchart of the method for simulating the motor sound playback of the electric balance vehicle.
FIG. 13 is a flowchart of selecting a sound data segment.
FIG. 14 is a flowchart of outputting the sound data segment.
FIG. 15 is a schematic diagram of a module structure of an engine-sound simulation device.

### Detailed Description of Embodiments

Best Mode of the Invention

### Embodiment 1

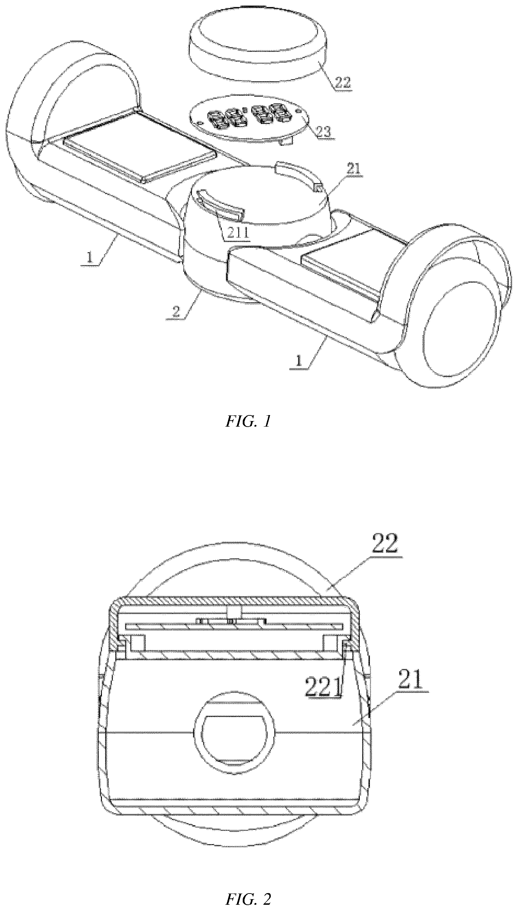

A human-machine interaction body-sensing vehicle with an extension with detachable function, as shown in FIGS. 1 and 2, includes two support frames 1 relatively disposed left and right. Wheels are installed on outer ends of the two support frames 1. The rotational connection between inner ends of the two support frames 1 is implemented through a rotating mechanism. A middleware 2 is disposed between the two support frames 1. The middleware 2 includes a base 21 and a functional extension 22 detachably connected to the base 21.

The base 21 is disposed with an arc-shaped groove 211, and the functional extension 22 is disposed with an arc-shaped protrusion 221. The connection between the base 21 and the functional extension 22 is implemented through engaging the arc-shaped protrusion 221 with the arc-shaped groove 211.

An electronic control module for controlling the human-machine interaction body-sensing vehicle is also included. The functional extension 22 is a display assembly including a display screen 23 and a transparent upper cover. The electrical connection between the display screen and the electronic control module is implemented through a connector on the base 21. For example, an electrical connection socket is disposed on the base, the electronic control module is connected to the electrical connection socket through a wire, the display screen is connected with an electrical connection plug through the wire, and the electrical connection plug is plugged into the electrical connection socket.

### Modes of the Invention

### Embodiment 2

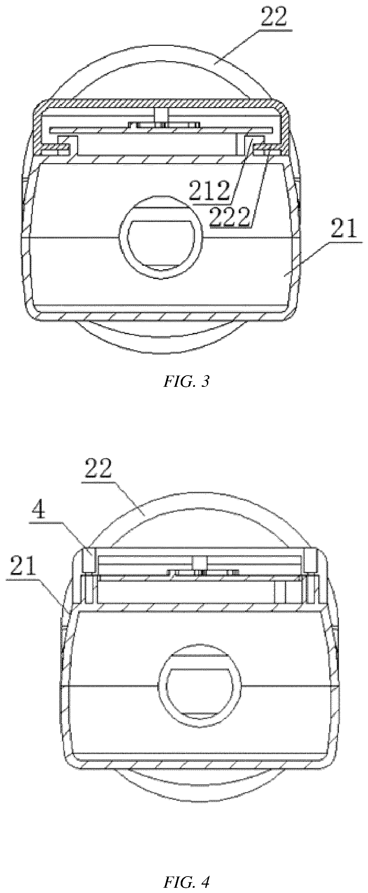

A human-machine interaction body-sensing vehicle with an extension with detachable function, as shown in FIGS. 1 and 3, includes two support frames 1 relatively disposed left and right. Wheels are installed on outer ends of the two support frames 1. The rotational connection between inner ends of the two support frames 1 is implemented through a rotating mechanism. A middleware 2 is disposed between the two support frames 1. The middleware 2 includes a base 21 and a functional extension 22 detachably connected to the base 21.

The base 21 is disposed with a linear groove 212, and the functional extension 22 is disposed with a protrusion 222 matching the shape of the linear groove 212. The connection between the base 21 and the functional extension 22 is implemented through engaging the protrusion 222 into the linear groove 212.

An electronic control module for controlling the human-machine interaction body-sensing vehicle is also included. The functional extension 22 is a display assembly including a display screen 23 and a transparent upper cover. The electrical connection between the display screen and the electronic control module is implemented through a connector.

### Embodiment 3

A human-machine interaction body-sensing vehicle with an extension with detachable function, as shown in FIGS. 1 and 4, includes two support frames 1 relatively disposed left and right. Wheels are installed on outer ends of the two support frames 1. The rotational connection between inner ends of the two support frames 1 is implemented through a rotating mechanism. A middleware 2 is disposed between the two support frames 1. The middleware 2 includes a base 21 and a functional extension 22 detachably connected to the base 21.

A screw 4 is also disposed. The base 21 and the functional extension 22 are connected through the screw 4.

An electronic control module for controlling the human-machine interaction body-sensing vehicle is also included. The functional extension 22 is a display assembly including a display screen 23 and a transparent upper cover. The electrical connection between the display screen and the electronic control module is implemented through a connector.

### Embodiment 4

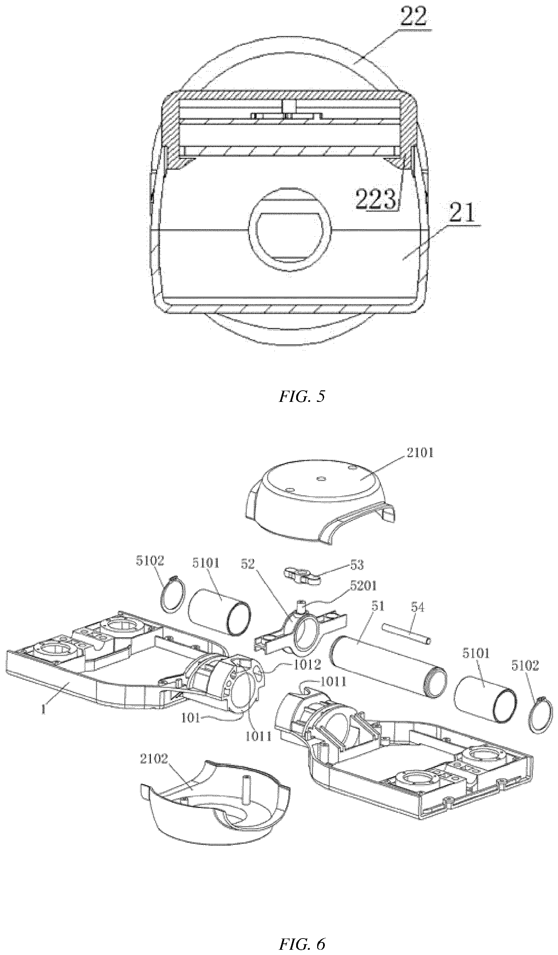

A human-machine interaction body-sensing vehicle with an extension with detachable function, as shown in FIGS. 1 and 5, includes two support frames 1 relatively disposed left and right. Wheels are installed on outer ends of the two support frames 1. The rotational connection between inner ends of the two support frames 1 is implemented through a rotating mechanism. A middleware 2 is disposed between the two support frames 1. The middleware 2 includes a base 21 and a functional extension 22 detachably connected to the base 21.

The functional extension 22 is disposed with a hook 223 extending downward, and the base 21 is disposed with an engaging opening corresponding to the hook. The connection between the base 21 and the functional extension 22 is implemented through engaging the hook 223 extending downward with the engaging opening.

An electronic control module for controlling the human-machine interaction body-sensing vehicle is also included. The functional extension 22 is a display assembly including a display screen 23 and a transparent upper cover. The electrical connection between the display screen and the electronic control module is implemented through a connector.

### Embodiment 5

A human-machine interaction body-sensing vehicle with an extension with detachable function, as shown in FIGS. 1, 2, and 6, includes two support frames 1 relatively disposed left and right. Wheels are installed on outer ends of the two support frames 1. The rotational connection between inner ends of the two support frames 1 is implemented through a rotating mechanism. A middleware 2 is disposed between the two support frames 1. The middleware 2 includes a base 21 and a functional extension 22 detachably connected to the base 21.

The base 21 is disposed with an arc-shaped groove 211, and the functional extension 22 is disposed with an arc-shaped protrusion 221. The connection between the base 21 and the functional extension 22 is implemented through engaging the arc-shaped protrusion 221 with the arc-shaped groove 211.

An electronic control module for controlling the human-machine interaction body-sensing vehicle is also included. The functional extension 22 includes a bubble core 6 and a case. The case and the base are detachably connected. The electrical connection between the bubble core 6 and the electronic control module is implemented through a connector.

The rotating mechanism is a rotating shaft 51. A fixing piece 52 and a limiting piece 53 capable of swinging or rotating are disposed on the rotating shaft 51. The limiting piece 53 is installed on the fixing piece 52 and the plane where the limiting piece 53 swings or rotates is parallel to the axis of the rotating shaft 51. The left and right sides of the limiting piece 53 respectively cooperate to limit the inner ends of the left and right support frames 1. The middleware 2 is fixed to or integrally formed on the fixing piece 52.

### Embodiment 6

A human-machine interaction body-sensing vehicle with an extension with detachable function, as shown in FIGS. 1, 2, and 6, includes two support frames 1 relatively disposed left and right. Wheels are installed on outer ends of the two support frames 1. The rotational connection between inner ends of the two support frames 1 is implemented through a rotating mechanism. A middleware 2 is disposed between the two support frames 1. The middleware 2 includes a base 21 and a functional extension 22 detachably connected to the base 21.

The base 21 is disposed with an arc-shaped groove 211, and the functional extension 22 is disposed with an arc-shaped protrusion 221. The connection between the base 21 and the functional extension 22 is implemented through engaging the arc-shaped protrusion 221 with the arc-shaped groove 211.

An electronic control module for controlling the human-machine interaction body-sensing vehicle is included. The functional extension 22 includes a bubble core 6 and a case. The case and the base 21 are detachably connected. A control switch of the bubble core is disposed on the case.

### Embodiment 7

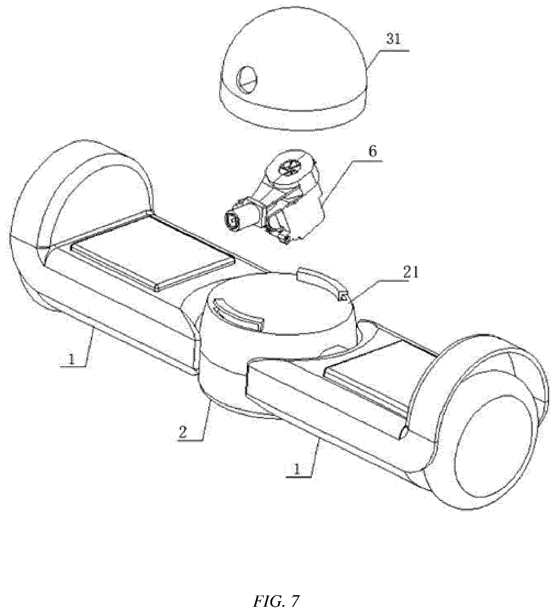

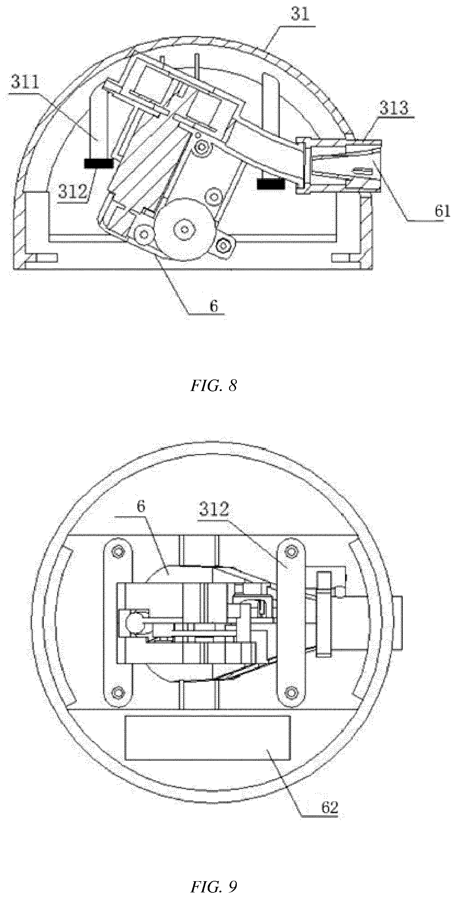

A human-machine interaction body-sensing vehicle with bubble blowing function, as shown in FIGS. 7 to 9, includes two support frames 1 relatively disposed left and right. Wheels are installed on outer ends of the two support frames 1. The rotational connection between inner ends of the two support frames 1 is implemented through a rotating mechanism. A middleware 2 is disposed between the two support frames 1. A bubble core 6 is disposed in the middleware 2. A fixing column 311 is disposed on the middleware 2. A fixing sheet 312 is installed on the fixing column 311. The bubble core 6 is fixed through installing the fixing sheet 312 to the fixing column 311. An electronic control module for controlling the human-machine interaction body-sensing vehicle is also provided. The electrical connection between the bubble core 6 and the electronic control module is implemented through a connector on the base.

The middleware 2 includes a case 31 and a base 21. The case 31 and the base 21 are detachably connected. The case 31 is disposed with a bubble outlet 313. The bubble core 6 is disposed with a bubble blower 61. The bubble blower 61 passes through the bubble outlet 313. A liquid storage container 62 connected to the bubble core is also disposed in the middleware 2. At least one side of the bubble core 6 is disposed with the liquid storage container 62.

When in use, the user steps on the upper side of the support frame 1. Blowing bubbles may be implemented by turning on a bubble machine through controlling the electronic control module.

The case 31 and the base 21 are detachably connected. To add water to the bubble machine, water is added to the liquid storage container by quickly opening the case.

### Embodiment 8

A human-machine interaction body-sensing vehicle with bubble blowing function, as shown in FIGS. 7 to 9, includes two support frames 1 relatively disposed left and right. Wheels are installed on outer ends of the two support frames 1. The rotational connection between inner ends of the two support frames 1 is implemented through a rotating mechanism. A middleware 2 is disposed between the two support frames 1. A bubble core is disposed in the middleware 2. A fixing column 311 is disposed on the middleware 2. A fixing sheet 312 is installed on the fixing column 311. The bubble core 6 is fixed through installing the fixing sheet 312 to the fixing column 311. The bubble core 6 is disposed with a switch.

The middleware 2 includes a case 31 and a base 21. The case 31 and the base 21 are integrally fixed. The case 31 is disposed with a bubble outlet. The bubble core 6 is disposed with a bubble blower 61. The bubble blower 61 passes through the bubble outlet. A liquid storage container 62 connected to the bubble core is also disposed in the middleware 2. At least one side of the bubble core 6 is disposed with the liquid storage container 62. The power source of the bubble core may be its own battery or the battery of the human-machine interaction body-sensing vehicle.

When in use, the user steps on the upper side of the support frame 1. Blowing bubbles may be implemented by turning on the bubble core 6 through the independent switch of the bubble core 6.

### Embodiment 9

A human-machine interaction body-sensing vehicle with bubble blowing function, as shown in FIGS. 6 to 9, includes two support frames 1 relatively disposed left and right. Wheels are installed on outer ends of the two support frames 1. The rotational connection between inner ends of the two support frames 1 is implemented through a rotating mechanism. A middleware 2 is disposed between the two support frames 1. A bubble core is disposed in the middleware 2. A fixing column 311 is disposed on the middleware 2. A fixing sheet 312 is installed on the fixing column 311. The bubble core 6 is fixed through installing the fixing sheet 312 to the fixing column 311.

The middleware 2 includes a case 31 and a base 21. The case 31 and the base 21 are detachably connected. The case 31 is disposed with a bubble outlet. The bubble core 6 is disposed with a bubble blower 61. The bubble blower 61 passes through the bubble outlet 313. An electronic control module for controlling the human-machine interaction body-sensing vehicle is also provided. The electrical connection between the bubble core 6 and the electronic control module is implemented through a connector on the base. A liquid storage container 62 connected to the bubble core is also disposed in the middleware 2. At least one side of the bubble core 6 is disposed with the liquid storage container 62.

The rotating mechanism is a rotating shaft 51. A fixing piece 52 and a limiting piece 53 capable of swinging or rotating are disposed on the rotating shaft 51. The limiting piece 53 is installed on the fixing piece 52 and the plane where the limiting piece 53 swings or rotates is parallel to the axis of the rotating shaft 51. The left and right sides of the limiting piece 53 respectively cooperate to limit the inner ends of the left and right support frames 1. The middleware 2 is fixed to or integrally formed on the fixing piece 52.

When in use, the user steps on the upper side of the support frame 1. Blowing bubbles may be implemented by turning on a bubble machine through controlling the electronic control module.

### Embodiment 10

A human-machine interaction body-sensing vehicle with bubble blowing function, as shown in FIGS. 6 to 9, includes two support frames 1 relatively disposed left and right. Wheels are installed on outer ends of the two support frames 1. The rotational connection between inner ends of the two support frames 1 is implemented through a rotating mechanism. A middleware 2 is disposed between the two support frames 1. A bubble core is disposed in the middleware 2. A fixing column 311 is disposed on the middleware 2. A fixing sheet 312 is installed on the fixing column 311. The bubble core 6 is fixed through installing the fixing sheet 312 to the fixing column 311. An electronic control module for controlling the human-machine interaction body-sensing vehicle is also provided. The electrical connection between the bubble core 6 and the electronic control module is implemented through a connector on the base.

The middleware 2 includes a case 31 and a base 21. The case 31 and the base 21 are detachably connected. The case 31 is disposed with a bubble outlet. The bubble core 6 is disposed with a bubble blower 61. The bubble blower 61 passes through the bubble outlet. A liquid storage container 62 connected to the bubble core is also disposed in the middleware 2. At least one side of the bubble core 6 is disposed with the liquid storage container 62.

At least one side of relative sides of the two support frames 1 is fixed with a rotation limiting piece 54. The middleware 2 is connected to limit with the rotation limiting piece 54 on at least one support frame 1, so as to limit a rotation angle of the middleware 2 relative to one support frame 1 or two support frames 1.

When in use, the user steps on the upper side of the support frame 1. Blowing bubbles may be implemented by turning on a bubble machine through controlling the electronic control module.

As shown in FIG. 6, the rotating mechanism in the foregoing embodiments is a rotating shaft 51. A fixing piece 52 and a limiting piece 53 capable of swinging or rotating are disposed on the rotating shaft 51. The limiting piece 53 is installed on the fixing piece 52. The left and right sides of the limiting piece 53 respectively cooperate to limit the inner ends of the left and right support frames 1. The middleware 2 is fixed to or integrally formed on the fixing piece 52. In this way, since the left and right sides of the limiting piece are respectively limited by the left and right support frames, the limiting piece and the fixing piece connected thereto are limited relative to the whole vehicle body. That is, the limiting piece and the fixing piece are basically horizontal relative to the ground to prevent random movement or rocking of the middleware. When the left and right support frames relatively rotate, the limiting piece is driven by the support frames on the left and right sides to swing. In this way, the difference in the rotational displacement of the left and right support frames is converted into the swing or rotation of the limiting piece, which ensures that the rotation axis of the limiting piece is relatively centered. That is, it is ensured that the fixing piece and the middleware do not move with the relative rotation of the left and right support frames.

When the left and right support frames relatively rotate, the middleware generates a relatively small displacement, and the limiting piece swings or rotates around the center of rotation. The range of swing and rotation is basically within the same plane. The same plane here is not absolutely the same plane and may also include a slight displacement of the rotation plane of the limiting piece around the center of rotation, which is still regarded as that the range of swing and rotation of the limiting piece is basically on the same plane. In a preferred embodiment, the limiting piece 53 is installed on the fixing piece 52 and the plane where the limiting piece 53 swings or rotates is parallel to the axis of the rotating shaft 51.

In the mechanical positioning structure, the fixing piece 52 has at least three functions: the first is to connect to the rotating shaft, the second is to fix the middleware, and the third is to provide a center of swing or rotation for the limiting piece. There may be many types of specific forms of the fixing piece. In an embodiment, the fixing piece 52 is installed on the rotating shaft as an independent part through a manner of sleeving, engagement connection, plug-in connection, fixed connection, front and rear limitation, or left and right limitation. For example, as shown in FIG. 6, the fixing piece 52 has a through hole to be sleeved on the rotating shaft 51, has an extending portion extending forward and backward to be fixed to the middleware, and has a positioning pin 5201 to cooperate with a positioning hole on the limiting piece 53 to provide the center of rotation of the limiting piece. The through hole may have a complete hole shape or may have an almost hole shape (for example, a hole shape formed by two folded arms) as long as the through hole can be disposed on the rotating shaft. The extending portion may also extend leftward and rightward or upward and downward as long as the extending portion can fix the middleware. In order to provide the center of rotation of the limiting piece, the fixing piece and the limiting piece may be implemented through the cooperation between the positioning hole and the positioning pin, the cooperation between the positioning groove and the positioning protrusion, or other known forms that can be implemented. In another embodiment, the fixing piece is integrated with the rotating shaft. That is, the middleware is installed on the rotating shaft through a manner such as sleeving, engagement connection, pin connection, direct fixing, or indirect fixing, and a positioning pin or a positioning hole is directly disposed on the rotating shaft, so that the limiting piece is rotationally disposed and the center of swing or rotation is provided. In yet another embodiment, the fixing piece is integrated with the middleware. That is, the middleware is installed on the rotating shaft through a manner such as sleeving, engagement connection, pin connection, direct fixing, or indirect fixing or limitation, and the middleware is disposed with a positioning pin, a positioning hole, a positioning protrusion, or a positioning groove, so that the limiting piece is rotationally disposed and the center of swing or rotation is provided.

The limiting piece 53 has at least two functions: the first is to respectively connect to limit the left and right support frames on both sides to ensure that the limiting piece, the fixing piece, and the middleware can be relatively fixed when the left and right support frames do not relatively rotate; and the second is to swing or rotate around the center of rotation to ensure that the limiting piece, the fixing piece, and the middleware can remain relatively fixed when the left and right support frames relatively rotate. There are many types of specific forms of the limiting piece. In an embodiment, the limiting piece is a pendulum rod. For example, as shown in FIG. 6, two ends of the pendulum rod are respectively connected to limit and cooperate with the left and right support frames. The middle of the pendulum rod is installed on the fixing piece through a positioning hole, a positioning pin, a positioning protrusion, or a positioning groove. The inner ends of the left and right support frames are both disposed with a limiting groove 1011. The limiting piece accommodates an end portion in the limiting groove 1011 to implement the limiting cooperation and to be capable of swinging back and forth. In another deformed structure, two end portions of the limiting piece are movably connected to the left and right support frames respectively through a pin shaft to implement the limiting cooperation and to be capable of swinging. For example, the left end portion of the limiting piece is disposed with a pin shaft extending upward and downward. The pin shaft is plugged into to cooperate with an arc-shaped hole disposed on the left support frame, so as to implement the movable connection. The right end portion of the limiting piece is disposed with another pin shaft extending upward and downward. The pin shaft is plugged into to cooperate with an arc-shaped hole disposed on the right support frame, so as to implement the movable connection. In this way, when the left and right support frames relatively rotate, the pin shaft drives the limiting piece to swing back and forth. Obviously, it may also be that a pin shaft extending upward and downward is disposed on the left support frame. The pin shaft is plugged into to cooperate with an arc-shaped hole disposed on the limiting piece, so as to implement the movable connection. Another pin shaft extending upward and downward is disposed on the right support frame. The pin shaft is plugged into to cooperate with another arc-shaped hole disposed on the limiting piece, so as to implement the movable connection. In other embodiments, the arc-shaped hole may also be a waist-shaped hole, a fan-shaped hole, a semi-circular hole, etc., which has an arc-shaped guide surface on one side. The pin shaft may also be a roller column, a roller wheel, etc. In the limiting groove structure, the opening of the limiting groove near an inner end surface of the support frame is large, and the groove depth of the limiting groove away from the inner end surface of the support frame is small. That is, the limiting groove is like a triangle. The tip of the triangle cooperates with the end portion of the limiting piece, and the bottom of the triangle is open for the limiting piece to swing within a certain range. In another embodiment, the limiting piece is a gear. Inner end surfaces of the left and right support frames are disposed with transmission teeth. The transmission teeth are distributed in a ring shape or a fan shape. The transmission teeth mesh with the limiting piece for transmission. Relatively speaking, the pendulum rod limiting structure is easier to manufacture and assemble with a lower cost, and the gear limiting structure requires more precise manufacturing and assembly with a higher cost.

As shown in FIG. 6, the inner ends of the support frames 1 are disposed with cylinders 101 configured to insert the rotating shaft 51. Two ends of the rotating shaft 51 are respectively sleeved with shaft sleeves 5101 and are respectively inserted in the cylinders 101 of the left and right support frames 1.

The rotating shaft 51 is preferably a hollow shaft to facilitate the threading of wires. However, if conditions permit, the rotating shaft may not be a hollow shaft. For example, a partial hole or a groove for wires to pass through may be disposed on the rotating shaft.

One end of the rotating shaft 51 may be fixed to one support frame, and the other end may be rotationally connected to the other side support frame. Alternatively, both ends of the rotating shaft 51 may be rotationally connected to the corresponding support frames. The axis of the rotating shaft 51 and the rotation axis of the two wheels are the same rotation axis, that is, the three axes are collinear.

In a preferred embodiment, a collar 5102 configured to limit the axial movement of the shaft sleeve 5101 is disposed on the outer side of the cylinder 101.

In a preferred embodiment, a rotation limiting piece 54 is disposed between the left and right support frames 1 to limit the maximum rotation angle between the two. As shown in FIG. 6, the rotation limiting piece 54 is a limiting shaft. One end of the limiting shaft is fixed to the cylinder 101 of a support frame, and the other end cooperates to limit the cylinder 101 of the other support frame. The cylinder of the other support frame is disposed with a limiting ridge 1012 corresponding to the limiting shaft. The maximum rotation angle between the left and right support frames is limited through the cooperation between the limiting shaft and the limiting ridge 1012. It may be understood that the limiting ridge has an arc-shaped structure.

### Embodiment 11

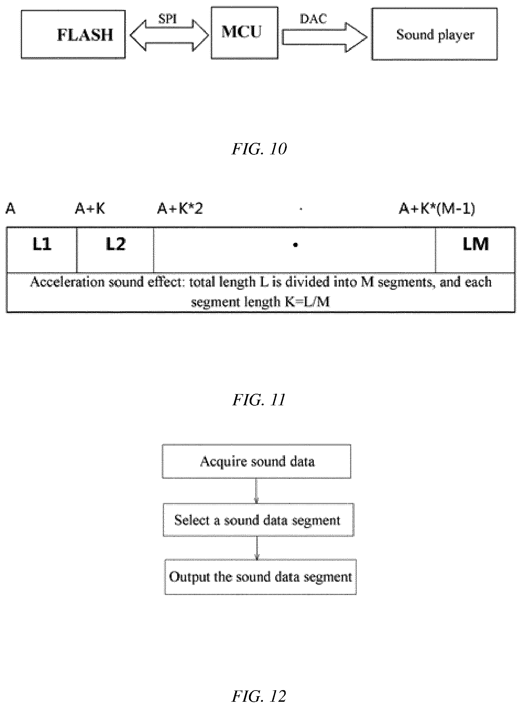

As shown in FIG. 10, a method for simulating motor sound playback of an electric balance vehicle is used in an electric balance vehicle. The electric balance vehicle includes a vehicle body and a hub motor driving the vehicle body. The device for implementing the method is installed on the vehicle body of the electric balance vehicle, which mainly includes a memory, a controller, and a sound player. The memory is configured to store sound data. The controller is configured to process the sound data in the memory, select a sound data segment from the memory, and output the sound data after digital-to-analog conversion to the sound player. The sound player mainly includes a voice coil configured to play the sound data. In the embodiment, the memory is a flash chip and the controller is a microcontroller unit (MCU). The controller and the sound player are connected through a power amplifier. The flash chip and the MCU communicate through a serial peripheral interface (SPI). The MCU and the power amplifier are connected through a digital-to-analog converter (DAC) chip.

As shown in FIG. 12, a method for simulating motor sound playback of an electric balance vehicle includes the following steps.

Sound data is acquired: sound data of a vehicle motor from an idle speed to a maximum speed is acquired for storing.

A sound data segment is selected: a current speed of the electric balance vehicle in a forward direction is acquired, and a sound data segment at a corresponding speed is selected for buffering according to the speed.

The sound data segment is outputted: a current acceleration of the electric balance vehicle in the forward direction is acquired, a reading interval for reading the sound data from a buffer is determined according to the acceleration, the buffered sound data segment is read according to the determined reading interval, and read results are sequentially played according to a bit rate of the sound data.

It should be noted that the step of acquiring the sound data is completed beforehand. For example, the step may be completed by the manufacturer during the production process, so that the remaining steps may be directly executed when simulating the motor sound.

In the embodiment, in addition to the sound data of the vehicle motor from the idle speed to the maximum speed (acceleration sound effect), the sound data segment for simulating ignition (ignition sound effect) and the sound data segment for simulating flameout (flameout sound effect) are also included. The sound data may be acquired through measures such as recording or software synthesis of audio. The sound data is converted into digital signals to be written into the memory and is used as the sound source of the balance vehicle to simulate the vehicle driving sound. For the sound data acquired in advance, starting positions, lengths, and sound data types of various sound data storage are recorded after classification.

Since the acceleration sound effect involves different motor sounds at multiple speeds, the sound data is segmented according to speed when storing the sound data or selecting the sound data segment, so that the real-time speed of the vehicle can correspond to the motor sound. The step of segmenting the sound data according to speed includes the following step. A starting position, a length, and a corresponding speed or speed interval of each sound data segment are recorded.

In the embodiment, the step of segmenting when storing the sound data is to first divide sound effect data into multiple sound data segments according to speed to be respectively stored (each data segment may be continuous or discontinuous). When selecting a sound data segment, the sound data segment is directly selected according to a real-time speed and a storage address of the sound data segment in a corresponding speed interval. In this way, the controller can easily call a sound data segment. However, it is necessary to manually record the addresses of the corresponding sound data segments at all speeds in advance. When recording, each sound data segment may be numbered as L1, L2, •••, LM according to the speed interval. The number of each sound data segment, the corresponding speed or speed interval, and the initial position and the length of the sound data segment generate a set of data for storage.

The driving speed of the electric balance vehicle is monitored in real time. The speed of the horizontal movement of the vehicle body is acquired in real time through detecting the rotational speed of the hub motor of the vehicle body.

It should be noted that the step of segmenting the sound data according to speed does not necessarily mean that the sound data is divided. The sound data may also be continuously stored only through segmenting the storage address. The step of segmenting when selecting the sound data segment is the same as the step of segmenting when storing the sound data, except that the storage address of each sound data segment is recorded through the controller. For example, the stored acceleration sound effect is sound data of continuous constant acceleration. The starting position of the acceleration sound effect stored in the memory is A (the data storage address in the flash chip), and the data length is L (L data points; if it is known that the sampling rate is NHz and the time length of the acceleration sound effect is T seconds, then L = T*N). As shown in FIG. 11, the whole acceleration sound effect is equally divided into M segments, and each sound effect data segment (that is, sound data segment) corresponds to the motor sound at a speed or a speed interval. The length of each data segment is K, where K = L/M. As such, the storage address at each speed may be known. For ease of use, each sound data segment may be numbered, such as L1, L2, ..., LM in FIG. 11. The corresponding relationship between each sound data segment and speed may be directed through controlling the corresponding relationship between the storage address of each sound data segment and speed. Specifically, as shown in FIG. 11, each sound data segment corresponds to a speed interval.

During the movement process of the human-machine interaction body-sensing vehicle, after detecting the speed and the acceleration of the human-machine interaction body-sensing vehicle, the controller selects the sound data segment corresponding to the speed interval according to the speed to be stored in a buffer, and a reading interval is set according to the acceleration. The controller monitors changes in speed in real time, and plays the sound data in the buffer according to the set reading interval when the speed changes. During playback, a playback address is defined as a position index of the buffer. Data is read from the buffer according to the playback address and is outputted by a DAC. An initial address of the playback address is determined according to the starting position of the selected sound data segment. A next playback address = a current playback address + the reading interval.

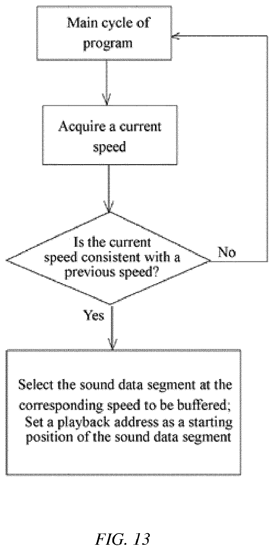

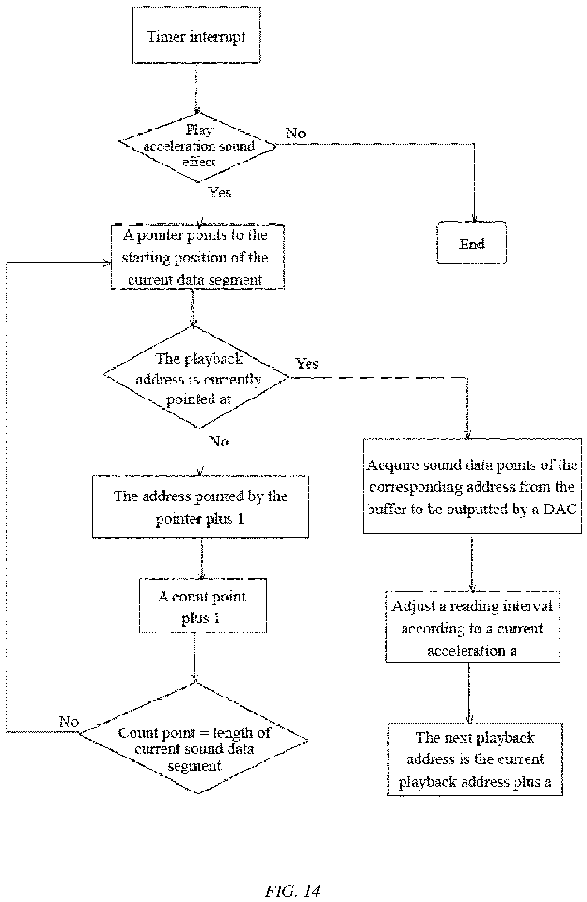

Correspondingly, FIG. 13 shows an embodiment of selecting a sound data segment. The controller selects the corresponding sound data segment according to the current driving speed of the balance vehicle, and buffers the sound data segment to a buffer region Buf. Once changes in the current speed is detected, the corresponding sound data is reselected for buffering. The implementation of outputting or playing the sound data segment is shown in FIGS. 13 and 14. In the embodiment, timer interrupt is adopted to select sound data points from the sound data segment for playback. A playback address is defined as a position index of the buffer (specific to a storage position of the sound data in the buffer). Data is read from the buffer according to the playback address and is outputted by a DAC. A starting position of a currently selected sound data segment is set as an initial address of the playback address. A next playback address = a current playback address + the reading interval. In the embodiment, the reading interval is an integer. A preset reading interval a=1. If a current acceleration is 0, the reading interval a=1. When the acceleration changes within a set threshold, the reading interval a correspondingly changes. The greater the acceleration, the greater the increase in the value of a. The corresponding relationship between the acceleration and the reading interval may be established by selecting several reading intervals and acceleration intervals through limited experiments or debugging.

As a preferred embodiment, if the acceleration exceeds the set threshold, the sound data segment in the buffer is updated, and the current playback address is set as the starting position of the sound data segment in the buffer. For example, if the acceleration is greater than the set threshold, the sound data segment in the buffer is updated to correspond to the sound data segment with a greater speed. In the embodiment, the sound data segment is cyclically output. Specifically, a count point is counted for every interrupt. A count value of the count point is compared with a length K of a current sound data segment. When the count value reaches K, the count value of the count point is cleared. The initial address of the playback address is set as the next playback address.

The implementation manner of ignition sound effect, flameout sound effect, and alarm sound effect is similar to acceleration sound effect. Sound effect data is stored in the memory, and an address and a length are recorded without segmentation. When playback is needed, the MCU will play corresponding sound effect data points according to the address and the length. When the human-machine interaction body-sensing vehicle detects that someone is standing thereon, the ignition sound effect is played. When the human-machine interaction body-sensing vehicle detects that the rider gets off the vehicle, the flameout sound effect is played. When the human-machine interaction body-sensing vehicle detects malfunction, the alarm sound effect is played. Further, different alarm sound effects may be set according to different types of malfunction, so that when the type of malfunction detected is different, the corresponding malfunction sound effect is played.

### Embodiment 12

A human-machine interaction body-sensing vehicle includes a vehicle body and two wheels disposed on the vehicle body. The vehicle body includes support frames. The support frames are disposed with a pedal device or a pedal region. The two wheels are driven by a hub motor to be respectively rotatably fixed to both sides of the support frames. The support frames may include a first support frame and a second support frame relatively disposed left and right and capable of relatively rotating. The first support frame and the second support frame are respectively disposed with pedal regions. References may be made to the electric balance vehicles disclosed in the invention patents with publication numbers CN107719549A and CN105939922A for the human body interaction body-sensing vehicle with such structure. The support frames may also be an integral structure. References may be made to the human body interaction body-sensing vehicles disclosed in patent documents such as CN207045552U and CN206644916U for the human body interaction body-sensing vehicle with such structure. In order to facilitate the observation of the working state of the human body interaction body-sensing vehicle, the vehicle body is disposed with an indicator light configured to display the power status of the motor and a light-emitting diode (LED) display screen configured to display speed and single mileage. An LED driver circuit is disposed between the controller and the LED display screen.

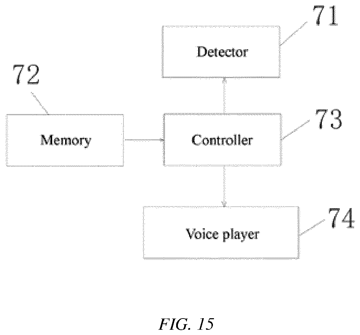

An engine-sound simulation device is installed on the vehicle body of the human-machine interaction body-sensing vehicle. As shown in FIG. 15, the engine-sound simulation device includes the following.

A detector 71 is configured to detect a current movement state of the body-sensing vehicle. The detector 71 may directly or indirectly acquire the driving speed and/or acceleration of the human-machine interaction body-sensing vehicle in the forward direction.

A memory 72 is configured to store audio data. The audio data is sound of an engine accelerating from an idle speed to a maximum speed recorded in advance. A controller 73 extracts the audio data in the memory according to a detection signal of the detector.

And is configured to receive the audio data selected by the controller for buffering to be sent to a player 73 for and playing.

The memory, the detector, and the player are all electrically connected to the controller.

The detector 71 may be a sensor that detects a current speed of the human-machine interaction body-sensing vehicle, so that the acceleration may be calculated through the speed. In the embodiment, the detector is a Hall sensor disposed on a stator of a hub motor. The driving speed is obtained through counting the rotational speed of the hub motor, and the acceleration is further calculated according to the speed.

In the embodiment, the memory 72 is implemented by adopting a flash chip.

The controller 73 may be an MCU or other common programmable chips.

The voice player 74 mainly includes a power amplifier unit and a speaker, and is configured to play audio data segments processed by the controller. When a single-chip microcomputer is selected as the controller, a pulse-width modulation (PWM) signal may be directly output to the voice player, which supports direct audio playback without an audio decoder chip. The functional module is simple.

Considering that the human-machine interaction body-sensing vehicle is disposed with a main control panel that controls the movement of the human-machine interaction body-sensing vehicle, for ease of implementation, in the embodiment, the memory and the controller in the engine-sound simulation device are integrated into the main control panel of the human-machine body-sensing vehicle.

The voice player is fixed to the vehicle body of the human-machine interaction body-sensing vehicle. There is no special requirement for the specific position, but the voice player is mostly disposed inside, and the corresponding position on the outer casing of the vehicle body is hollowed out. The memory 72 may be a memory that stores the audio data of the engine accelerating from the idle speed to the maximum rotational speed. The memory 72 may also store specific lengths of multiple audio data segments corresponding to each working condition of the engine.

The controller 73 intercepts or directly selects the audio data segment corresponding to the working condition from the memory according to the detection signal of the detector. The working conditions may be determined through the driving speed of the vehicle or the driving state of the vehicle. According to the acceleration acquired by the detector 71, frequency modulation processing is performed on the extracted audio data segment corresponding to the working condition. The frequency modulation processing here refers to performing acceleration or deceleration processing on the playback speed of the audio data.

Take the rapid acceleration of the human-machine interaction body-sensing vehicle as an example to illustrate the process of the balance vehicle simulating the engine acceleration sound. When the human-machine interaction body-sensing vehicle starts to accelerate, the detector 72 detects the speed and the acceleration of the human-machine interaction body-sensing vehicle; the controller 73 extracts corresponding audio data from the memory 72 according to the magnitude of the speed and the acceleration, then performs frequency compression processing on the audio data according to the magnitude of the acceleration to simulate the effect of the engine during rapid acceleration, and outputs a corresponding PWM signal; and the voice player 64 plays audio after the compression processing according to the PWM signal.

The balance vehicle can synchronously simulate the engine sound effect through a sound generator, such as a speaker, according to the movement state of the body-sensing vehicle to increase the fun of the user during the riding process and can have the sound warning function to the surrounding pedestrians, so as to improve the safety during the riding process.

In the descriptions of this specification, descriptions with reference to terms such as "an embodiment", "some embodiments", "an example", "a specific example", or "some examples" mean that specific features, structures, materials, or characteristics described in conjunction with the embodiment or example are included in at least one embodiment or example of the disclosure. In this specification, the schematic representations of the above terms do not necessarily refer to the same embodiment or example. Moreover, the specific features, structures, materials, or characteristics described may be combined in any one or more embodiments or examples in a suitable manner.

Although the embodiments of the disclosure have been shown and described above, it may be understood that the above embodiments are exemplary and should not be construed as limiting the disclosure. Persons skilled in the art may make changes, revisions, replacements, combinations, and modifications to the above embodiments within the scope of the disclosure without departing from the principle and aim of the disclosure. Any simple revision, equivalent change, and retouch made to the above embodiments based on the technical essence of the disclosure still belong to the scope of the technical solution of the disclosure.

## Claims

1. A human-machine interaction body-sensing vehicle, **characterized by** comprising: two support frames (1) relatively disposed left and right, wherein a rotational connection between inner ends of the two support frames (1) is implemented through a rotating mechanism, and a middleware (2) is disposed between the two support frames (1).

2. The human-machine interaction body-sensing vehicle according to claim 1, **characterized in that**: the middleware (2) comprises a base (21) and a functional extension (22) detachably connected to the base (21).

3. The human-machine interaction body-sensing vehicle according to claim 2, **characterized in that**: the base (21) is disposed with an arc-shaped groove (211), the functional extension (22) is disposed with an arc-shaped protrusion (221) matching the arc-shaped groove (211), and connection between the base (21) and the functional extension (22) is implemented through engaging the arc-shaped protrusion (221) with the arc-shaped groove (211).

4. The human-machine interaction body-sensing vehicle according to claim 2, **characterized in that**: the functional extension (22) is disposed with an arc-shaped groove, the base (21) is disposed with an arc-shaped protrusion matching the arc-shaped groove, and connection between the base (21) and the functional extension (22) is implemented through engaging the arc-shaped protrusion with the arc-shaped groove.

5. The human-machine interaction body-sensing vehicle according to claim 2, **characterized in that**: the base (21) is disposed with a linear groove (212), the functional extension (22) is disposed with a protrusion (222) matching the linear groove (212), and connection between the base (21) and the functional extension (22) is implemented through engaging the protrusion (222) into the linear groove (212).

6. The human-machine interaction body-sensing vehicle according to claim 2, **characterized in that**: the functional extension (22) is disposed with a linear groove, the base (21) is disposed with a protrusion matching the linear groove, and connection between the base (21) and the functional extension (22) is implemented through engaging the protrusion into the linear groove.

7. The human-machine interaction body-sensing vehicle according to claim 2, **characterized in that**: a screw (4) is further disposed, and the base (21) and the functional extension (22) are connected through the screw (4).

8. The human-machine interaction body-sensing vehicle according to claim 2, **characterized in that**: the functional extension (22) is disposed with a hook (223) extending downward, the base (21) is disposed with an engaging opening corresponding to the hook, and connection between the base (21) and the functional extension (22) is implemented through engaging the hook (223) extending downward with the engaging opening.

9. The human-machine interaction body-sensing vehicle according to claim 2, **characterized by** further comprising: an electronic control module for controlling the human-machine interaction body-sensing vehicle, wherein the functional extension (22) is a display assembly, which comprises a display screen (23) and a transparent upper cover, and electrical connection between the display screen and the electronic control module of the human-machine interaction body-sensing vehicle or a power supply is implemented through a connector on the base (21).

10. The human-machine interaction body-sensing vehicle according to claim 2, **characterized by** further comprising: an electronic control module for controlling the human-machine interaction body-sensing vehicle, wherein the functional extension (22) comprises a bubble core (6) and a case, the case and the base are detachably connected, and electrical connection between the bubble core (6) and the electronic control module of the human-machine interaction body-sensing vehicle or a power supply is implemented through a connector on the base.

11. The human-machine interaction body-sensing vehicle according to claim 2, **characterized by** further comprising: an electronic control module for controlling the human-machine interaction body-sensing vehicle, the functional extension (22) comprises a bubble core (6) and a case, the case and the base (21) are detachably connected, and a control switch of the bubble core is disposed on the case.

12. The human-machine interaction body-sensing vehicle according to claim 1, **characterized in that**: the rotating mechanism is a rotating shaft (51), a fixing piece (52) and a limiting piece (53) capable of swinging or rotating are disposed on the rotating shaft (51), the limiting piece (53) is installed on the fixing piece (52), left and right sides of the limiting piece (53) respectively cooperate to limit the inner ends of the two support frames (1), and the middleware (2) is fixed to or integrally formed on the fixing piece (52).

13. The human-machine interaction body-sensing vehicle according to claim 12, **characterized in that**: a plane where the limiting piece (53) swings or rotates is parallel to an axis of the rotating shaft (51).

14. The human-machine interaction body-sensing vehicle according to claim 1, **characterized in that**: a bubble core (6) is disposed in the middleware (2).

15. The human-machine interaction body-sensing vehicle according to claim 14, **characterized in that**: a fixing column (311) is disposed on the middleware (2), a fixing sheet (312) is installed on the fixing column (311), and the bubble core (6) is fixed through installing the fixing sheet (312) to the fixing column (311).

16. The human-machine interaction body-sensing vehicle according to claim 14, **characterized in that**: the middleware (2) comprises a case (31) and a base (21), and the case (31) and the base (21) are detachably connected.

17. The human-machine interaction body-sensing vehicle according to claim 14, **characterized in that**: the middleware (2) comprises a case (31) and a base (21), and the case (31) and the base (21) are integrally fixed.

18. The human-machine interaction body-sensing vehicle according to claims 16 or 17, **characterized in that**: the case (31) is disposed with a bubble outlet (313), the bubble core (6) is disposed with a bubble blower (61), and the bubble blower (61) passes through the bubble outlet (313).

19. The human-machine interaction body-sensing vehicle according to claim 14, **characterized in that**: a liquid storage container (62) connected to the bubble core (6) is also disposed in the middleware (2), and at least one side of the bubble core (6) is disposed with the liquid storage container (62).

20. The human-machine interaction body-sensing vehicle according to claim 1, **characterized in that**: at least one side of relative sides of the two support frames (1) is fixed with a rotation limiting piece, the middleware is connected to limit with the rotation limiting piece on at least one support frame (1), so as to limit a rotation angle of the middleware relative to one or two of the two support frames (1).
